# FASCICULE DE BREVET EUROPEEN

(11) **EP 1 121 019 B1**
(45) Date de publication et mention de la délivrance du brevet: **07.06.2006**
(21) Numéro de dépôt: 99947546.0
(22) Date de dépôt: 12.10.1999
(51) Int. Cl.: A23C 9/152, A23C 9/13, A23C 19/076, A23C 13/16

(54) **COMPOSITION ALIMENTAIRE A BASE DE MATIERE ISSUE DE LAIT COMPRENANT DES GLYCERIDES D'ACIDES LINOLEIQUES CONJUGUES**
KONJUGIERTE LINOLSÄURETRIGLYCERIDE ENTHALTENDES NAHRUNGSMITTEL AUF MILCHBASIS
FOOD COMPOSITION BASED ON SUBSTANCE DERIVED FROM MILK COMPRISING CONJUGATED LINOLEIC ACID GLYCERIDES

(30) Priorité: 12.10.1998 FR 9812731
(43) Date de publication de la demande: 08.08.2001
(73) Titulaire: COMPAGNIE GERVAIS DANONE, 92300 Levallois Perret (FR)
(72) Inventeur: DEPIERRIS, Anne, F-78350 Jouy-en-Josas (FR); CARCANO, Didier, F-75005 Paris (FR)
(74) Mandataire: Warcoin, Jacques
(86) Numéro de dépôt international: PCT/FR1999/002452
(87) Numéro de publication internationale: WO 2000/021379

(56) Documents cités:
- EP-A- 0 779 033
- EP-A- 0 954 975
- WO-A-96/38137
- WO-A-97/18320
- WO-A-99/47135
- US-A- 4 282 265
- US-A- 5 760 082
- US-A- 5 770 247
- PATENT ABSTRACTS OF JAPAN vol. 095, no. 001, 28 février 1995 (1995-02-28) & JP 06 276939 A (SNOW BRAND MILK PROD CO LTD), 4 octobre 1994 (1994-10-04)

## Description

La présente invention concerne une composition alimentaire, à base de matière issue de lait, sous la forme d'une émulsion huile dans eau, comprenant une quantité efficace de mono, di et/ou triglycéride d'un ou plusieurs isomères actifs des acides linoléiques conjugués (MG CLA, DG CLA et/ou TG CLA). Elle concerne plus particulièrement les compositions laitières fermentées, notamment les yoghourts, les crèmes fraîches ou les spécialités laitières.

Il convient cependant de bien préciser que l'invention vise de façon générale l'incorporation des glycérides de CLA dans des produits alimentaires constitués de matières premières à base de lait pris au sens large, c'est-à-dire qu'elle englobe également des matières premières d'origine végétale, notamment des céréales pouvant jouer le rôle de substituts ou de compléments de matières premières d'origine laitière, en particulier des produits à base de laits de soja et/ou d'avoine. La fabrication de ce type de produits alimentaires peut être illustrée par la demande de brevet WO 99/27795.

Aujourd'hui, une proportion importante de la population souhaite réduire ou maintenir son poids corporel tout en conservant une alimentation normale et variée. De plus, le maintien du poids corporel doit être assuré tout en favorisant la masse musculaire au détriment de la masse adipeuse.
Les isomères actifs des acides linoléiques conjugués (CLA) sont connus pour exercer une action positive pour réduire l'assimilation des graisses chez les mammifères, notamment chez les humains. Ils sont également connus pour augmenter ou prévenir la diminution de la quantité de protéines chez les mammifères, notamment les humains. Les isomères actifs des acides linoléiques conjugués se présentent sous la forme d'un mélange comprenant principalement l'acide 9, 11-octadecadiénoïque et l'acide 10, 12-octadécadiénoïque.

Les compositions diététiques peuvent être administrées par voie parentérale ou orale. Dans le premier cas, il s'agit de compositions à base d'huile et de protéine végétale ou de protéine issue des oeufs. Par exemple, le brevet US 5,760,082 décrit un aliment diététique pour les humains, contenant de 0,5 % à 1 % en poids de CLA sous la forme triglycéride.

En revanche, en ce qui concerne les compositions orales, les CLA sont sous forme libre. On peut citer par exemple, la demande de brevet WO-A-94/16690 qui décrit une composition diététique supplémentée, à raison de 0,1 à 2 % en poids de celle-ci, avec des acides linoléiques conjugués. Mais ces compositions sont destinées à améliorer la prise de poids des animaux. La demande de brevet WO-A-96/06605 décrit une méthode pour diminuer les graisses chez les mammifères consistant à administrer une quantité efficace d'acides linoléiques conjugués. De tels acides sont ajoutés à raison de 0,01 % à 2,0 % dans les émulsions eau dans huile en remplacement de 0,5 à 2 % de l'huile normalement présente dans ces émulsions.
Le brevet US 5 430 066 décrit une composition alimentaire pour les humains ou les animaux, souffrant d'anorexie ou de perte de poids suite à une stimulation immune, supplémentée de la nourriture avec des acides linoléiques conjugués.
La demande de brevet WO-A-97/46230 décrit une méthode pour maintenir un niveau existant de matière grasse dans le corps et maintenir le poids de l'individu à l'aide d'acides linoléiques conjugués (CLA). Cette méthode consiste à ajouter à des aliments du type margarine une dose efficace de CLA.
La demande de brevet WO 96/38137 concerne l'utilisation de CLA pour lutter contre la perte de poids. A cet effet, ce document décrit la production de CLA dans du lait par des Lactobacillus.
Le brevet US 5,770,247 décrit une méthode de production de CLA dans le lait des vaches. Le CLA se trouve sous la forme libre. Dans JP 06276939, les CLA sont également sous la forme libre.

Enfin, la demande de brevet EP-A-779 033 décrit une pâte à étaler à base de graisse du type margarine, c'est-à-dire une émulsion eau dans huile, dans laquelle la phase grasse comprend 0,05 à 20 % d'acide linoléique conjugué. Une telle composition permet d'améliorer le profil lipidique du sang.

Par ailleurs, on sait que les acides linoléiques conjugués sont présents naturellement dans les produits laitiers en faible quantité. Cette teneur varie de 0,07 % dans les yogourts à 0,20 % dans certains fromages dont le taux d'extrait sec est élevé (cf. H. LIN et al, J. Dairy Sci 78.2358-2365).

Les produits laitiers à base d'une émulsion huile dans eau présentent un taux de matière grasse généralement inférieur à 50 %. Ces émulsions huile dans eau peuvent être non fermentées comme les laits écrémés, les laits demi-écrémés, les laits partiellement écrémés, entiers, les condensés. L'émulsion peut également être sous la forme d'un produit laitier fermenté. Notamment les fromages frais, les yaourts ou assimilés et autres produits laitiers fermentés.

II serait souhaitable de proposer aux consommateurs un produit alimentaire laitier satisfaisant aux goûts des consommateurs sous la forme d'une émulsion huile dans eau qui puisse s'intégrer à une diète quotidienne en assurant à celui-ci le maintien du poids corporel tout en favorisant la masse musculaire au détriment de la masse adipeuse.

De façon inattendue, on a trouvé que les acides linoléiques conjugués sous forme lipophile pouvaient être incorporés à des produits laitiers sous la forme d'une émulsion huile dans l'eau et répondre au but que se propose d'atteindre la présente invention. D'une part, on a trouvé que les acides linoléiques conjugués sous la forme MG CLA, DG CLA et/ou TG CLA présentaient une excellente stabilité dans les produits laitiers objets de la présente invention (meilleure résistance à l'oxydation et meilleure processabilité). D'autre part, l'utilisation de CLA dont tout ou partie est sous forme de mono, di et/ou triglycérides selon la présente invention permet d'obtenir des produits laitiers, fermentés ou non, qui ne présentent pas les problèmes de mauvais goût rencontrés avec les CLA sous forme d'alkylester. Il est donc possible d'en introduire des doses efficaces en conservant des caractéristiques organoliptiques satisfaisantes. La demanderesse a en effet réussi à incorporer de façon homogène le CLA, sous forme d'esters de glycéro, dans des émulsions HIE contenant moins de 50 % de matière grasse en évitant le recours à des adjuvants. En outre, les mono, di et/ou triglycérides de CLA présents dans les compositions selon l'invention présentent une biodisponibilité accrue.

L'objet de la présente invention est de proposer un produit laitier supplémenté en une quantité efficace d'acide linoléique conjugué qui s'intègre à une diète quotidienne et qui présente un taux de matière grasse inférieur à 50 % en poids.
Selon l'invention, la composition alimentaire, à base de matière issue de lait, sous la forme d'une émulsion huile dans eau, éventuellement foisonnée est caractérisée en ce que le taux de matière grasse est inférieur à 50 % en poids et en ce qu'elle comprend une quantité efficace de mono, di et/ou triglycéride d'un ou plusieurs isomères actifs des acides linoléiques conjugués (MG CLA, DG CLA et/ou TG CLA).

Une quantité efficace de CLA selon l'invention se définit par rapport à l'apport journalier qui se situe à 4 g environ d'isomères actifs de CLA/jour. Cet apport journalier exprimé en pourcentage de poids du produit correspond suivant le type de produit alimentaire à une teneur de 1 à 15 % de CLA actifs sous la forme MG CLA, DG CLA et/ou TG CLA, de préférence une teneur comprise entre 1,5 et 13 %, notamment 3 à 5 % p/p.
Avantageusement, 20 à 50 % en poids de la matière grasse, de préférence 20 à 40 % notamment environ 30 % est constituée des isomères actifs CLA sous la forme MG CLA, DG CLA et/ou TG CLA.

Habituellement, les acides linoléiques sont sous la forme d'un mélange comprenant au moins 50 % des isomères actifs des acides 9, 11-octadecadiénoïques et/ou 10,12-octadecadiénoïques, le reste du mélange peut être constitué de diverses huiles végétales à base d'acides en C₁₆ à C₂₀ saturés ou insaturés.

Ainsi, la composition alimentaire selon l'invention se caractérise en ce que les isomères actifs des acides linoléiques conjugués (CLA) sont choisis dans le groupe constitué par l'acide 9,11-octadecanoïque et l'acide 10,12-octadecanoïque. Les isomères actifs des acides linoléiques conjugués (CLA) peuvent être un mélange d'acide 9,11-octadecanoïque et d'acide 10,12-octadecanoïque. La composition selon l'invention peut également comprendre en faibles proportions d'autres acides gras insaturés ou saturés tel que par exemple l'acide palmitique, stéarique, oléique et/ou linoléique non conjugué (C18 :2 c9, c12), lesdits acides gras peuvent être sous la forme libre ou estérifié, notamment sous la forme MG, DG, et/ou TG.

De préférence, lesdits isomères actifs des acides linoléiques conjugués (CLA) sont de préférence choisis parmi les isomères suivants :
- acide 9 cis, 11 trans linoléique
- acide 10 trans, 12 cis linoléique.
   Avantageusement, les proportions respectives de ces deux isomères pourront varier de 0,5 à 99,5 %. Aussi, le mélange pourra être constitué à parts égales de CLA 10t, 12c et de CLA 9c, 11t , ou bien le CLA 10t, 12c représentera 70 à 75 % et jusqu'à 90 ou 95 % des isomères de CLA présents; selon un autre aspect, le CLA 9c, 11t sera le constituant majoritaire du mélange d'isomères, dont il représentera 60 à 95 %, de préférence au moins 70 % et avantageusement de 75 à 90 % de la composition de CLA. Des compositions d'acide linoléique conjugué convenant à la mise en oeuvre de l'invention sont notamment décrites dans la demande WO 99/47135.
   Avantageusement, la composition alimentaire présente un taux de matière grasse total compris entre 1,5 et 35 % en poids, de préférence compris entre 4 et 33 % en poids, cette matière grasse comprenant notamment la matière grasse issue de lait, les isomères actifs CLA sous forme MG, DG, et/ou TG, éventuellement d'autres huiles végétales.

Ces isomères et d'autres formes de l'acide linoléique conjugués sont essentiellement sous forme de mono, di et triglycérides, même si de faibles quantités de CLA sous forme libre ou sous forme d'alkylesters, de préférence ces formes représentant moins de 1 % de la composition totale en CLA, avantageusement moins de 0,5 %.
De préférence, les isomères seront essentiellement présents sous forme de TG, ceux-ci représentant au moins 30 % p/p, de préférence au moins 50 % et avantageusement au moins 60 %, notamment de 60 à 90 %.
Selon les modes de réalisation, jusqu'à 70 % p/p et en particulier de 20 à 30 % des différents isomères du CLA pourront par exemple être sous forme de diglycérides.

Les acides linoléiques conjugués peuvent se présenter sous une forme plus ou moins purifiée. Une forme commercialement accessible comprend de 56 à 67 % d'isomères actifs des acides linoléiques conjugués ; 19 à 34 % d'acide oléique ; 2 à 9 % d'acide linoléique, ces acides étant sous la forme de triglycérides. Comme mélange on cite par exemple le Selin® CLA-TG commercialisé par GRÜNAU-ILLERTISSEN GmbH ou le CLA commercialisé par NATURAL LIPIDS sous la marque Tonalin™ CLA 75 %-TG.

En général, ladite composition présente une activité de l'eau comprise entre 0,65 et 0,99, de préférence entre 0,75 et 0,99 avantageusement supérieure à 0,90 et un pH acide ou neutre.
L'activité de l'eau d'un produit est une notion qui est bien connue dans le domaine alimentaire, cette mesure (en abrégé Aw) mesure la disponibilité de l'eau dans un produit. Dans la plupart des cas, cette activité de l'eau n'est pas proportionnelle à la teneur en eau du produit.

A titre d'exemple, un yaourt aux fruits comporte 82 % d'eau et possède une Aw égale à 0,99 ; le fromage frais contient 16 % d'eau et possède une Aw égale à 0,99.

Les méthodes permettant la mesure de l'Aw d'un produit sont connues de l'homme du métier.

Les produits laitiers peuvent être fermentés ou non. Il peut s'agir notamment de produits laitiers frais fermentés.
Par produit laitier frais fermenté, on entend une base laitière qui suite à un ensemencement par des bactéries lactiques a été fermentée, puis mélangée avec des autres ingrédients pour conduire au produit laitier frais fermenté. Ce produit laitier frais fermenté conservé entre 4 et 10°C, présente encore des bactéries vivantes, de préférence encore au moins 10² à 10⁸, de préférence 10⁴ à 10⁵ bactéries vivantes par ml pendant 4 à 6 semaines.
De préférence, le produit laitier fermenté est choisi dans le groupe constitué par les fromages frais, les crèmes fraîches, les spécialités laitières, les yaourts ou assimilés et autres produits laitiers fermentés contenant seuls ou en mélange des bactéries lactiques vivantes, telles que S. thermophilus, L. bulgaricus, L. acidophilus, L. bifidus, L. lactococcus et Leuconostoc.
Par produit laitier non fermenté, on entend les laits écrémés, les laits demi-écrémés, les laits partiellement écrémés, entiers, les condensés.
La composition peut également contenir un ou plusieurs sucres. Cette présence peut améliorer notamment la qualité gustative.
Afin d'améliorer les caractéristiques de fraîcheur et de fondant de la composition, le taux de foisonnement de la composition est de préférence supérieure à 30 %, de préférence de 100 à 250 %. Le foisonnement est assuré par injection d'un gaz inerte. Dans certains cas, le taux de foisonnement pourra atteindre ou dépasser 300 %. La composition pourra comprendre également des additifs tels que des émulsifiants, des arômes et un agent stabilisant le foisonnement.

Il est également possible d'incorporer un ou plusieurs stabilisants tels que la gélatine, le guar, le xanthane, la pectine de 0,2 % à 2 % pour permettre d'obtenir un produit plus crémeux et plus stable dans le temps.

La composition peut également être enrichie en arôme et/ou charge solide alimentaire bien connue. Parmi les charges solides, on cite notamment les préparations de fruits, les particules de chocolat (pépites), les céréales, les noisettes.
Le pH est avantageusement compris entre 4 et 5 pour un produit laitier fermenté.
Selon une variante préférée, la composition est fermentée et est choisie dans le groupe constitué par les yogourts ou les crèmes fraîches.
Selon une autre variante préférée, la composition alimentaire est formée d'un yogourt dont l'activité de l'eau est comprise entre 0,95 et 0,99 comprenant en pourcentage en poids :
- lait écrémé 70 à 80
- matière grasse laitière 1 à 10,
   avantageusement 1 à 3,
- isomères actifs des CLA sous la forme MG, DG, et/ou TG 1 à 5
- sucres 1 à 6
- huile végétale 0 à 2
- autres additifs 5 à 20.

Selon une autre variante, la composition alimentaire est formée d'une crème fraîche dont l'activité de l'eau est comprise entre 0,95 et 0,99 comprenant en pourcentage en poids :
- lait écrémé 40 à 60
- matière grasse laitière 5 à 35,
   avantageusement 5 à 20
- huile végétale 0 à 10
- isomères actifs des CLA sous la forme MG, DG, et/ou TG 5 à 13,
de préférence 10 % environ.

Les inventeurs ont constaté que la proportion de CLA actif était stable dans les produits alimentaires conformes à l'invention. La teneur en CLA est stable au cours du traitement thermique. La teneur totale en CLA et la proportion en isomères actifs reste la même. De plus l'activité des ferments lactiques au cours de la fermentation du yoghourt ou de la maturation de la crème n'affecte pas la teneur en CLA, en particulier des isomères actifs du produit fini.
Les exemples ci-après illustrent les différentes variantes de l'invention.

### Exemple 1

Le tableau ci-dessous comprend la formule d'un yoghourt conforme à l'invention.

| Ingrédients | Crème Yaourt E |
|---|---|
| Lait 0% MG | 75,18 |
| Crème 400 | 4,6 |
| Selin CLA-TG (*) | 2,7 |
| Caséinate Na | 1,513 |
| DOMO 400 | 1,513 |
| Sucre | 3,5 |
| Sirop de vanille | 11 |
| Total | 100 |
| MG laitière (%) | 1,88 |
| MG totale (%) | 4,58 |
| CLA-TG (%) | 1,62 |
| Consommation produit (g/j) | 250 |
| Consommation CLA (g/j) | 4,05 |

| | |
|---|---|
| (*) Le Selin® CLA-TG comprend 56 à 67 % de CLA, le restant étant constitué d'acide en C₁₆ ou C₁₈ saturé ou insaturé, notamment 19 à 34 % d'acide oléique, 2 à 9 % d'acide linoléique, jusqu'à 3 % d'acide stéarique. Le lait à 0% de MG standardisé en protéines est mélangé avec de la matière grasse laitière additionnée de CLA. Le mix, éventuellement sucré subit un traitement thermique de pasteurisation à 95°C pendant 5 à 10 min. Le mix pasteurisé est homogénéisé, puis refroidi jusqu'à la température de fermentation. On ensemence avec un ferment lactique thermophile. La fermentation est poursuivie jusqu'à atteindre un pH compris entre 4,5 et 4,7 à une température comprise entre 38 et 42°C. | |
| Après décaillage, le produit est lissé puis refroidi jusqu'à 20°C. Le produit fini peut-être additionné de d'arôme ou préparation de fruits. Le produit est conservé à une température de 4 à 10°C pendant une durée de 28 jours. | |

### Exemple 2 : Composition selon l'invention préparée à partir de Tonalin™ CLA 75 %-TG (Natural lipids Idt AS, Norvège).

Le tableau ci-dessous comprend la formule d'un yoghourt conforme à l'invention.

| Ingrédients | % |
|---|---|
| Lait 0% MG | 84,43 |
| Poudre de lait écrémé | 3,40 |
| Gélatine | 0,37 |
| Tonalin™ CLA 75 %-TG (*) | 3,75 |
| Sucre | 8,00 |
| Arôme | 0,05 |
| Total | 100 |
| Consommation produit (g/j) | 125 |
| Consommation CLA (g/j) | 4,68 |

| | |
|---|---|
| (*) Tonalin™ CLA 75 %-TG est un produit disponible chez Natural lipids Itd AS qui est un mélange d'acides gras d'origine végétale sous forme de triglycérides contenant 73,7 % de divers isomères de CLA. | |

Ce produit est décrit par le fabricant comme contenant :

| | |
|---|---|
| Acide palmitique (C18 :0) | < 9 % |
| Acide stéarique (C18 :0) | < 4 % |
| Acide oléique (C18:1 c9) | 10-20% |
| Acide linoléique (C18 :2 c9, c12) | < 3 % |
| CLA (C18 :2 conjugué) | 70 - 82 % |
| CLA (C18 :2 conjugué c9, t11) | 30 - 38 % |
| CLA (C18 :2 conjugué t10, c12) | 30 - 38 % |

Le lait à 0% de MG standardisé en protéines est mélangé avec de la poudre de lait écrémé, le sucre et la gélatine. Le mélange subit ensuite un traitement thermique de pasteurisation sur une plage de température de 75 à100°C, de préférence 95°C, pendant 5 à 10 min. Le mélange pasteurisé est homogénéisé, puis refroidi jusqu'à la température de fermentation. On ensemence avec un ferment lactique thermophile. La fermentation est poursuivie jusqu'à atteindre un pH compris entre 4,5 et 4,7 à une température comprise entre 38 et 42°C.

Après décaillage, le produit est lissé puis refroidi jusqu'à une température allant de 5 à 25°C, de préférence 15°C. Le produit fini peut être additionné d'arôme ou d'une préparation de fruits. Le produit est conservé à une température allant de 4 à 10°C pendant une durée de 28 jours.

### Exemple 3

Le tableau ci dessous comprend la formule d'une crème maturée conforme à l'invention. Le produit est préparé comme dans l'exemple 1, à l'exception du ferment lactique qui est mésophile. La fermentation est donc conduite à une température comprise entre 18 et 30°C.

| Ingrédients | Crème fraîche E |
|---|---|
| Lait 0% MG | 50,5 |
| Crème 400 | 32,5 |
| Selin® CLA-TG (*) | 17 |
| Total | 100 |
| MG laitière (%) | 13,03 |
| MG totale (%) | 30,03 |
| CLA-TG (%) | 10,2 |
| Consommation produit (g/j) | 40 |
| Consommation CLA (g/j) | 4,08 |

## Revendications

1. Composition alimentaire, à base de matière issue de lait, sous la forme d'une émulsion huile dans eau, éventuellement foisonnée, dont le taux de matière grasse est inférieur à 50 % en poids **caractérisée en ce qu'**elle comprend de 1 à 15 %, avantageusement de 1,5 à 13 % de mono, di et/ou triglycéride d'un ou plusieurs isomères actifs des acides linoléiques conjugués nommés MG CLA, DG CLA et/ou TG CLA.

2. Composition alimentaire selon la revendication 1, **caractérisée en ce que** les isomères actifs des acides linoléiques conjugués nommés CLA sont choisis dans le groupe constitué par l'acide 8,11-octadecanoïque et l'acide 10,12-octadecanoïque.

3. Composition alimentaire selon l'une des revendications 1 à 2 **caractérisée en ce que** les isomères actifs des acides linoléiques conjugués nommés CLA comprennent un mélange d'acide 9,11-octadecanoïque et d'acide 10,12-octadecanoïque.

4. Composition selon l'une des revendications 1 à 3 **caractérisée en que** lesdits isomères actifs des acides linoléiques conjugués nommés CLA sont de préférence choisis parmi les isomères suivants :
- acide 9 cis, 11 trans linoléique
- acide 10 trans, 12 cis linoléique.

5. Composition alimentaire selon l'une des revendications 1 à 4, **caractérisée en ce qu'**elle comprend en pourcentage en poids 1,5 à 35 % de matière grasse, avantageusement 4 à 33 %.

6. Composition alimentaire selon l'une des revendications 1 à 5, **caractérisée en ce qu'**elle comprend un ou plusieurs additifs choisis dans le groupe constitué par les sucres, les émulsifiants, les arômes, les agents stabilisant le foisonnement.

7. Composition alimentaire selon l'une des revendications 1 à 6, **caractérisée en ce qu'**elle est fermentée et est choisie dans le groupe constitué par les yogourts, les crèmes fraîches.

8. Composition alimentaire selon l'une des revendications 1 à 7, **caractérisée en ce qu'**elle présente une activité de l'eau comprise entre 0,9 et 0,99.

9. Composition alimentaire selon l'une des revendications 1 à 8, **caractérisée en ce qu'**elle est formée d'un yogourt dont l'activité de l'eau est comprise entre 0,95 et 0,99, comprenant en pourcentage en poids :
- lait écrémé 70 à 80
- matière grasse laitière 1 à 10
- isomères actifs des CLA sous la forme MG, DG et/ou TG 1 à 5
- sucres 1 à 6
- huile végétale 0 à 2
- autres additifs 5 à 20.

10. Composition alimentaire selon l'une des revendications 1 à 8, **caractérisée en ce qu'**elle est formée d'une crème fraîche dont l'activité de l'eau est comprise entre 0,95 et 0,99 comprenant en pourcentage en poids :
- lait écrémé 40 à 60
- matière grasse laitière 5 à 35
- huile végétale 0 à 10
- isomères actifs des CLA sous la forme MG, DG et/ou TG 5 à 13,
de préférence 10 % environ.

## Claims

1. Food composition based on a substance derived from milk, in the form of an oil-in-water emulsion, which is optionally overrun, whose fat content is less than 50% by weight, **characterized in that** it comprises from 1% to 15% and advantageously from 1.5% to 13% of mono-, di- and/or triglyceride of one or more active isomers of the conjugate linoleic acids, called CLA MG, CLA DG and/or CLA TG.

2. Food composition according to Claim 1, **characterized in that** the active isomers of the conjugated linoleic acids called CLAs are chosen from the group consisting of 9,11-octadecanoic acid and 10,12-octadecanoic acid.

3. Food composition according to either of Claims 1 and 2, **characterized in that** the active isomers of the conjugated linoleic acids called CLAs comprise a mixture of 9,11-octadecanoic acid and 10,12-octadecanoic acid.

4. Composition according to one of Claims 1 to 3, **characterized in that** said active isomers of the conjugated linoleic acids called CLAs are preferably chosen from the following isomers:
- 9-cis-11-trans-linoleic acid,
- 10-trans-12-cis-linoleic acid.

5. Food composition according to one of Claims 1 to 4, **characterized in that** it comprises, as percentages by weight, 1.5% to 35% and advantageously 4% to 33% fat.

6. Food composition according to one of Claims 1 to 5, **characterized in that** it comprises one or more additives chosen from the group consisting of sugars, emulsifiers, flavourings and overrun stabilizers.

7. Food composition according to one of Claims 1 to 6, **characterized in that** it is fermented and is chosen from the group consisting of yoghurts and crèmes fraîches.

8. Food composition according to one of Claims 1 to 7, **characterized in that** it has a water activity of between 0.9 and 0.99.

9. Food composition according to one of Claims 1 to 8, **characterized in that** it is formed from a yoghurt whose water activity is between 0.95 and 0.99, comprising, as percentages by weight:
- skimmed milk 70 to 80
- dairy fat 1 to 10
- active isomers of CLAs in MG, DG and/or TG form 1 to 5
- sugars 1 to 6
- plant oil 0 to 2
- other additives 5 to 20.

10. Food composition according to one of Claims 1 to 8, **characterized in that** it is formed from a crème fraîche whose water activity is between 0.95 and 0.99, comprising, as percentages by weight:
- skimmed milk 40 to 60
- dairy fat 5 to 35,
- plant oil 0 to 10
- active isomers of CLAs in MG, DG and/or TG form 5 to 13,
preferably about 10%.

## Patentansprüche

1. Nahrungsmittelzusammensetzung auf der Grundlage von Material, das von Milch abstammt, in Form einer gegebenenfalls gequollenen Öl-in-Wasser-Emulsion, deren Fettgehalt unter 50 Gew.-% liegt, **dadurch gekennzeichnet, dass** sie 1 bis 15 %, vorteilhaft 1,5 bis 13 % Mono-, Di- und/oder Triglycerid eines oder mehrerer aktiver Isomere von konjugierten Linolsäuren umfasst, die als MG CLA, DG CLA und/oder TG CLA bezeichnet werden.

2. Nahrungsmittelzusammensetzung nach Anspruch 1, **dadurch gekennzeichnet, dass** die aktiven Isomere der konjugierten Linolsäuren, die als CLA bezeichnet werden, ausgewählt sind aus der Gruppe bestehend aus 9,11-Octadecansäure und 10,12-Octadecansäure.

3. Nahrungsmittelzusammensetzung nach einem der Ansprüche 1 bis 2, **dadurch gekennzeichnet, dass** die aktiven Isomere von konjugierten Linolsäuren, die als CLA bezeichnet werden, eine Mischung von 9,11-Octadecansäure und 10,12-Octadecansäure umfassen.

4. Zusammensetzung nach einem der Ansprüche 1 bis 3, **dadurch gekennzeichnet, dass** die aktiven Isomere von konjugierten Linolsäuren, die als CLA bezeichnet werden, vorzugsweise aus den folgenden Isomeren ausgewählt sind:
- 9-cis,11-trans-Linolsäure
- 10-trans,12-cis-Linolsäure

5. Nahrungsmittelzusammensetzung nach einem der Ansprüche 1 bis 4, **dadurch gekennzeichnet, dass** sie in Gewichtsprozent 1,5 - 35 %, vorteilhaft 4 bis 33 % Fett umfasst.

6. Nahrungsmittelzusammensetzung nach einem der Ansprüche 1 bis 5, **dadurch gekennzeichnet, dass** sie einen oder mehrere Zusätze umfasst, die ausgewählt sind aus der Gruppe bestehend aus Zuckern, Emulgatoren, Aromen, Mitteln, welche die Quellung stabilisieren.

7. Nahrungsmittelzusammensetzung nach einem der Ansprüche 1 bis 6, **dadurch gekennzeichnet, dass** sie fermentiert ist und ausgewählt ist aus der Gruppe bestehend aus Joghurts, Crèmes fraîches.

8. Nahrungsmittelzusammensetzung nach einem der Ansprüche 1 bis 7, **dadurch gekennzeichnet, dass** sie eine Wasseraktivität zwischen 0,9 und 0,99 einschließlich aufweist.

9. Nahrungsmittelzusammensetzung nach einem der Ansprüche 1 bis 8, **dadurch gekennzeichnet, dass** sie aus einem Joghurt gebildet ist, dessen Wasseraktivität zwischen 0,95 und 0,99 einschließlich liegt, welcher in Gewichtsprozent umfasst:
- Magermilch 70 bis 80
- Milchfett 1 bis 10
- aktive Isomere von CLA in Form von MG, DG und/oder TG 1 bis 5
- Zucker 1 bis 6
- Pflanzenöl 0 bis 2
- andere Zusätze 5 bis 20.

10. Nahrungsmittelzusammensetzung nach einem der Ansprüche 1 bis 8, **dadurch gekennzeichnet, dass** sie aus einer Crème fraîche gebildet ist, deren Wasseraktivität zwischen 0,95 und 0,99 einschließlich liegt, welche in Gewichtsprozent umfasst:
- Magermilch 40 bis 60
- Milchfet 5 bis 35
- Pflanzenöl 0 bis 10
- aktive Isomere von CLA in Form von MG, DG und/oder TG 5 bis 13,
vorzugsweise etwa 10 %.
